**Europäisches Patentamt**

**European Patent Office**

**Office européen des brevets**

(11) Veröffentlichungsnummer: **0 310 821**

**A2**

(12) **EUROPÄISCHE PATENTANMELDUNG**

(21) Anmeldenummer: **88114672.4**

(22) Anmeldetag: **08.09.88**

(51) Int. Cl.4: **F04D 29/04**

(30) Priorität: **03.10.87 DE 3733558**

(43) Veröffentlichungstag der Anmeldung:
**12.04.89 Patentblatt 89/15**

(84) Benannte Vertragsstaaten:
**AT BE DE FR GB IT NL SE**

(71) Anmelder: **Klöckner-Humboldt-Deutz
Aktiengesellschaft
Deutz-Mülheimer-Strasse 111 Postfach 80 05 09
D-5000 Köln 80(DE)**

(72) Erfinder: **Gnaehrich, Alfred
Norderneystrasse 20
D-4350 Recklinghausen(DE)**

(74) Vertreter: **Beisner, Klaus, Dipl.-Ing. et al
c/o KHD Humboldt Wedag AG Patente und
Lizenzen Wiersbergstrasse Postfach 91 04 57
D-5000 Köln 91(DE)**

(54) **Kreiselpumpe.**

(57) Bei den bisher bekannten Kreiselpumpen mit auf der Antriebswelle fliegend gelagertem Laufrad erfolgt die Lagerung der Antriebswelle im Lagergehäuse über zwei Radiallager und ein Axiallager. Diese bekannten Lager sind in ihrem konstruktiven Aufbau nicht nur verhältnismäßig kompliziert und kostenaufwendig, sondern auch ihre Lebensdauer ist verhältnismäßig gering, da sie im Betrieb der Kreiselpumpe hohen Wechselbeanspruchungen ausgesetzt sind. Auch die Laufeigenschaften des Laufrades und der damit verbundene Wirkungsgrad der Pumpe werden durch vorzeitiges Auftreten von unerwünscht großem Lagerspiel nachteilig beeinflußt. Gemäß der Erfindung werden jedoch diese Nachteile in einfacher Weise dadurch beseitigt, daß zur Lagerung der Antriebswelle (1) im Lagergehäuse (8) zwei Radiallager (9, 10) und zwei Axiallager (11, 12) vorgesehen sind.

## Kreiselpumpe

Kreiselpumpe mit auf einer Antriebswelle fliegend gelagertem Laufrad, wobei die Lagerung der Antriebswelle im Lagergehäuse über Radiallager und Axiallager erfolgt.

Bei bekannten Kreiselpumpen obiger Bauart sind zur Lagerung der Antriebswelle des Laufrades zwei Radiallager und ein Axiallager vorgesehen. Von diesen drei Lagern müssen im Betrieb der Kreiselpumpe sowohl die in radialer Richtung wirkenden Kräfte als auch die in Achslängsrichtung der Antriebswelle wirkenden Kräfte aufgenommen und kompensiert werden. Da jedoch bei dieser bekannten Lagerung der Antriebswelle von den Radiallagern außer den in radialer Richtung wirkenden Kräften auch die in Achsrichtung der Antriebswelle wirkende Kräfte aufgenommen und kompensiert werden müssen, sind diese Lager ganz besonders hohen ungleichförmigen Wechselbeanspruchungen ausgesetzt. Diese Lager müssen daher besonders stark dimensioniert werden und ihre Standzeit ist aufgrund der hohen Wechselbelastungen relative gering.

Weiterhin läßt sich bei dieser bekannten Lagerung des Laufrades auch nicht die erforderliche Betriebsspaltweite zwischen dem Laufrad und der verschleißschutzgesicherten Gehäusewandung aufrechterhalten, was sich nicht nur nachteilig auf die Laufeigenschaften des Laufrades auswirken kann, sondern wodurch auch der Pumpenwirkungsgrad beeinträchtigt werden kann.

Ausgehend von dieser bekannten Laufradlagerung bei Kreiselpumpen besteht die Aufgabe der Erfindung darin, alle im Betrieb der Kreiselpumpe auftretenden Schub- und Radialkräfte optimal auf die Lager der Antriebswelle des Laufrades zu verteilen.

Diese Aufgabe wird dadurch gelöst, daß zur Lagerung der Antriebswelle im Lagergehäuse zwei Radiallager und zwei Axiallager vorgesehen sind. Auf diese Weise wird sehr vorteilhaft eine Teilung der im Betrieb der Kreiselpumpe auftretenden Schubkräfte von den Radialkräften erreicht, und zwar derart, daß den Radiallagern nur die Rundführung zugeordnet wird, während von den Axiallagern nur die in Achsrichtung der Antriebswelle wirkenden Schubkräfte aufgenommen werden. Die Radiallager werden hierdurch völlig freigehalten von im Betrieb der Kreiselpumpe auftretenden Schubkräften, und die Axiallager werden dagegen freigehalten von Radialkräften. Die Lebensdauer und die damit verbundene Standzeit der Radiallager und der Axiallager wird daher im Vergleich zu den bisher im Einsatz befindlichen Lagern ganz wesentlich erhöht.

Ein weiterer Vorteil besteht darin, daß zur Lagerung der Antriebswelle des Laufrades einfache, standardisierte, überall leicht erhältliche Lager verwendet und eingesetzt werden können, deren Anschaffungskosten wesentlich geringer sind als die bisher bekannten sehr komplizierten und materialaufwendigen Lager. Darüber hinaus bietet die erfindungsgemäße Lagerung der Antriebswelle des Laufrades auch eine sichere Gewähr für die Aufrechterhaltung der erforderlichen Betriebsspaltweite zwischen Laufrad und der verschleißschutzgesicherten Gehäusewandung.

Gemäß einer weiteren vorteilhaften Ausgestaltung der Erfindung sind die Lager im Lagergehäuse mit axialem Abstand voneinander angeordnet, wobei jeweils ein Radiallager und ein Axiallager zu einer Baueinheit zusammengefaßt sind. Durch diese Anordnung der Lager im Lagergehäuse wird nicht nur sehr vorteilhaft die Montage und die Demontage der Lager ganz wesentlich vereinfacht und erleichtert, sondern es werden hierdurch auch die in beiden Längsrichtungen der Antriebswelle wirkenden Schubkräfte von den Axiallagern störungsfrei aufgenommen und kompensiert.

In weiterer Ausgestaltung der Erfindung sind die Radiallager als Loslager und die Axiallager im Lagergehäuse in axialer Richtung nachgiebig angeordnet. Hierdurch werden sehr vorteilhaft die im Betrieb der Kreiselpumpe durch Wärmeeinwirkung auftretenden Längsdehnungen der Antriebswelle innerhalb des Lagergehäuses kompensiert und dadurch insbesondere die Radiallager vor Schubbelastungen bewahrt.

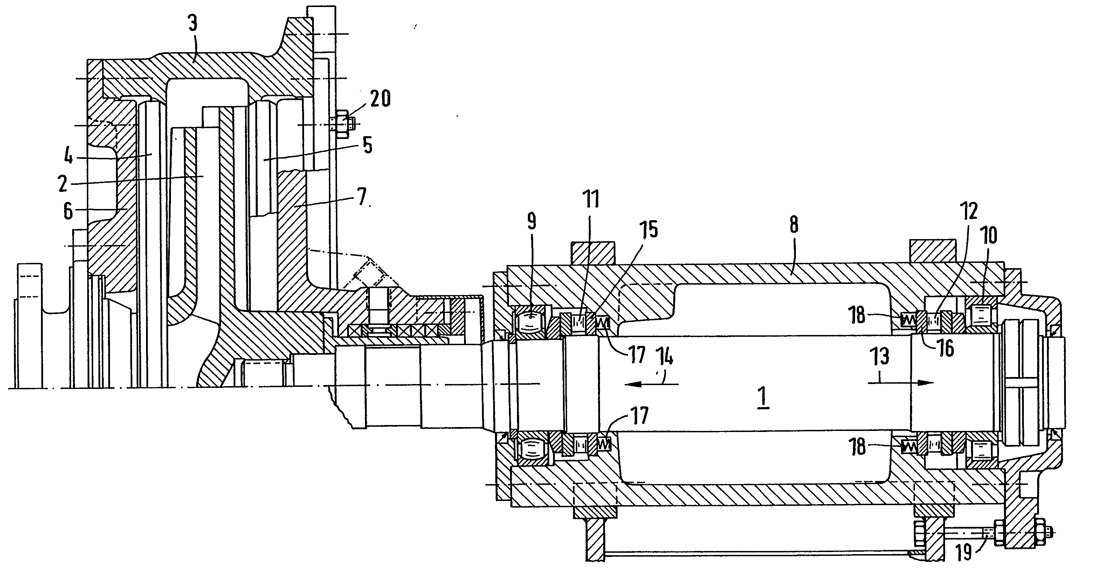

Weitere Einzelheiten, Merkmale und Vorteile der Erfindung ergeben sich aus der nachfolgenden Erläuterung einer in der Zeichnung im Teillängsschnitt schematisch dargestellten Kreiselpumpe.

Wie die Zeichnung zeigt, besteht die Kreiselpumpe in wesentlichen aus einem auf einer Antriebswelle (1) fliegend angeordnetem Laufrad (2), das außen von einem Spiralgehäuse (3) umgeben ist. Zu beiden Seiten des Laufrades sind mit geringem Abstand Verschleißplatten (4 und 5) angeordnet, die die Stirnwände (6 und 7) des Spiralgehäuses (3) nach außen hin abdecken. Die Verschleißplatten (4 und 5), die aus Keramik oder aus sonstigen, hochverschleißfesten Materialien bestehen, sind scheibenförmig und zu beiden Seiten gleich ausgebildet, so daß sie sehr vorteilhaft beidseitig benutzt werden können, d. h., wenn die Oberfläche der einen Seite bis auf ein vorbestimmtes Mindestmaß verschlissen ist, kann die Verschleißplatte in einfacher Weise gewendet und die Oberfläche der neuen Seite wiederum solange dem Verschleiß ausgesetzt werden, wie die Oberfläche der zuvor verschlissenen Plattenseite.

Gemäß der Erfindung sind zur Lagerung der Antriebswelle (1) im Lagergehäuse (8) zwei Radiallager (9 und 10) als Loslager sowie zwei Axiallager (11 und 12) mit axialem Abstand voneinander an-. geordnet. Durch diese Anordnung der Lager gemäß der Erfindung wird sehr vorteilhaft eine optimale Verteilung der im Betrieb der Kreiselpumpe auftretenden Radialkräfte und Schubkräfte erreicht. So werden bei dieser erfindungsgemäßen Lageranordnung die jeweils im Betrieb der Kreiselpumpe auftretenden Radialkräfte nur auf die Radiallager (9 und 10) übertragen und von diesen aufgenommen, während die im Betrieb der Pumpe auftretenden, in Achsrichtung wirkenden Schubkräfte wiederum nur auf die Axiallager (11 und 12) übertragen und von diesen aufgenommen werden. Auf diese Weise gelingt es, die Radiallager völlig frei von Schubkräften und die Axiallager wiederum frei von Radialkräften zu halten. Hierdurch wird nicht nur sehr vorteilhaft eine wesentliche Verlängerung der Lagerlebensdauer erreicht, sondern es können als Radiallager und Axiallager auch ganz einfache, standardisierte Lager eingesetzt werden, deren Anschaffungskosten verhältnismäßig gering sind.

Ferner sind jeweils ein Radiallager (9 bzw. 10) und ein Axiallager (11 bzw. 12) zu einer Baueinheit zusammengefaßt. Vom Axiallager (11) werden hierbei jeweils die vom Laufrad (2) ausgehenden, in Pfeilrichtung (13) wirkenden Schubkräfte aufgenommen, während vom Axiallager (12) die in entgegengesetzter Richtung (Pfeil 14) wirkenden Schubkräfte aufgenommen werden.

Im übrigen sind die Radiallager (9, 10) und die Axiallager (11, 12) im Lagergehäuse (8) sehr vorteilhaft in axialer Richtung nachgiebig angeordnet, so daß sie sich den durch Wärmeeinwirkung im Betrieb der Kreiselpumpe auftretenden Längenänderungen der Antriebswelle (1) leicht anpassen können, ohne Schaden zu nehmen. Die Lagerringe (15, 16) der Axiallager (11, 12) sind hierbei sehr vorteilhaft auf im Lagergehäuse (8) angeordnete Federn (17, 18) abge stützt, so daß sie sich nicht von den Lagern (11, 12) abheben können, wenn sich diese aufgrund der Längenänderungen der Antriebswelle nach rechts, in Pfeilrichtung (13), oder nach links, in Pfeilrichtung (14), bewegen.

Ferner ist das dem Laufrad (2) näherliegende Radiallager (9) als Pendelrollenlager ausgebildet, um die im Betrieb vom Laufrad (2) ausgehenden Biegemomente aufzunehmen, die im wesentlichen auf die häufig wechselnde, oft sehr unterschiedliche Konsistenz des Fördergutes zurückzuführen sind. Im übrigen erlaubt die erfindungsgemäße Ausgestaltung und Anordnung der Lagerung die Betriebsspaltweite zwischen dem Laufrad (2) und den Verschleißplatten (4, 5) extrem klein zu halten, was wesentlich zur Optimierung des Wirkungsgrades der Pumpe beiträgt.

Ein weiterer und ganz besonderer Vorteil der erfindungsgemäß ausgebildeten Kreiselpumpe besteht auch darin, daß die Einzelelemente in sehr einfacher Weise, nach Art des Baukastensystems so ausgelegt und aufeinander abgestimmt sind, daß die Pumpe bei dem Zusammenbau der Einzelelemente, insbesondere hinsichtlich der Betriebsspaltweite zwischen dem Laufrad und den Verschleißplatten und den Laufeigenschaften des Laufrades von außen her optimal eingestellt werden kann. Für die Einstellung dieser Parameter sind lediglich zwei Schrauben (19, 20) erforderlich, die außen am Lagergehäuse (8) und an der Stirnwand (7) angeordnet sind. Sowohl die Wartung als auch die Montage und Demontage der Lagerung, des Laufrades sowie der Verschleißplatten wird auf diese Weise ganz wesentlich vereinfacht und verkürzt.

Ferner ist hierbei von Vorteil, daß aus den Teilen (8) durch Einbau der Lagerung (9, 11 und 10, 12) sowie des Laufrades (2) auf der Antriebswelle (1) und den Teilen (5) und (7) eine außerhalb der Pumpe montierbare und in ihrer Funktion prüfbare Baugruppe gebildet wird, wodurch weiterhin vorteilhaft ermöglicht wird, diese Baugruppe vor dem Einschub in das Spiralgehäuse (3) optimal auszuwuchten und dadurch die Laufruhe der Pumpe, die Lebensdauer der Lagerung und die Schallabstrahlung günstig zu beeinflussen.

Weiterhin ist die Kreiselpumpe gemäß der Erfindung mit einer in der Zeichnung nicht näher dargestellten, an sich bekannten Kreislaufschmierung versehen, die im Vergleich zu der bisher bei Kreiselpumpen angewandten Sumpfschmierung neben einer Verbesserung des Schmiereffektes eine wesentliche Verbesserung der Wärmeabfuhr und damit Kühlung der Pumpe ermöglicht.

Der Gegenstand der Erfindung ist nicht auf die im Ausführungsbeispiel dargestellte Kreiselpumpe beschränkt. So kann die erfindungsgemäß ausgebildete Lagerung der Antriebswelle mit eben denselben Vorteilen auch für Kreiselpumpen angewendet werden, bei denen das Laufrad auf einer durchgehenden Antriebswelle angeordnet und zu beiden Seiten in jeweils einem Radiallager und einem Axiallager gelagert ist. Auch bei anderen Maschinen, wie beispielsweise Zentrifugen und dgl., bei denen von den Lagern Radialkräfte und Axialkräfte aufgenommen werden müssen, kann die Lagerung der Antriebswelle gemäß der Erfindung mit Vorteil eingesetzt werden.

**Ansprüche**

1. Kreiselpumpe mit auf einer Antriebswelle fliegend gelagertem Laufrad, wobei die Lagerung der Antriebswelle im Lagergehäuse über Radiallager und Axiallager erfolgt, dadurch gekennzeichnet, daß zur Lagerung der Antriebswelle (1) im Lagergehäuse (8) zwei Radiallager (9, 10) und zwei Axiallager (11, 12) vorgesehen sind.

2. Kreiselpumpe nach Anspruch 1, dadurch gekennzeichnet, daß die Lager (9, 10, 11, 12) im Lagergehäuse (8) mit axialem Abstand voneinander angeordnet sind, wobei jeweils ein Radiallager (9 bzw. 10) und ein Axiallager (11 bzw. 12) zu einer Baueinheit zusammengefaßt sind.

3. Kreiselpumpe nach Anspruch 1 oder 2, dadurch gekennzeichnet, daß die Radiallager (9, 10) als Loslager und die Axiallager (11, 12) im Lagergehäuse (8) in axialer Richtung nachgiebig angeordnet sind.

4. Kreiselpumpe nach einem der vorhergehenden Ansprüche, dadurch gekennzeichnet, daß das dem Laufrad (2) näher liegende Radiallager (9) als Pendelrollenlager ausgebildet ist.